# EUROPÄISCHE PATENTSCHRIFT

(11) **EP 3 357 806 B1**
(45) Veröffentlichungstag und Bekanntmachung des Hinweises auf die Patenterteilung: **05.11.2025**
(21) Anmeldenummer: 18156501.1
(22) Anmeldetag: 06.09.2011
(51) Int. Cl.: B63H 20/14, F16H 57/04

(54) **GETRIEBE**
TRANSMISSION
BOÎTE DE VITESSES

(30) Priorität: 06.09.2010 DE 102010044436
(43) Veröffentlichungstag der Anmeldung: 08.08.2018
(62) Teilanmeldung aus: 11755276.0
(73) Patentinhaber: REINTRIEB GmbH, 1070 Wien (AT)
(72) Erfinder: LAIS, Siegfried, 56322 Spay (DE)
(74) Vertreter: Metten, Karl-Heinz

(56) Entgegenhaltungen:
- WO-A1-2005/100810
- WO-A2-2005/120798
- WO-A2-2007/109784
- CN-A- 101 334 024
- CN-A- 101 718 297
- DE-A1- 1 808 637
- DE-A1- 10 019 516
- DE-A1- 19 629 398
- GB-A- 1 452 568
- GB-A- 2 164 308
- JP-A- 2002 303 297
- JP-A- 2005 326 021
- JP-A- H03 185 298
- JP-B2- H 081 211
- US-A- 3 487 805
- US-A- 4 948 384
- US-A1- 2005 214 135
- US-B1- 6 186 758
- US-B1- 6 318 898
- WANG S Y ET AL: "Enhancement of surface properties of 45<#> carbon steel using plasma immersion ion implantation", THIN SOLID FILMS, ELSEVIER-SEQUOIA S.A. LAUSANNE, CH, vol. 311, no. 1-2, 31 December 1997 (1997-12-31), pages 190 - 195, XP004121341, ISSN: 0040-6090, DOI: 10.1016/S0040-6090(97)00465-3
- TEETER F J ET AL: "WEAR PROTECTION FOR GEARS", GEAR TECHNOLOGY, RANDALL PUBLISHING CO. ELK GROVE, ILLINOIS, US, vol. 13, no. 2, 1 March 1996 (1996-03-01), pages 27 - 29, XP000550309, ISSN: 0743-6858

## Beschreibung

Die Erfindung betrifft ein Getriebe, insbesondere für ein Wasserfahrzeug, mit mindestens einer in einem ersten Lager drehbar angeordneten ersten Welle, die mit einer Energievorrichtung, insbesondere Hydraulikmaschine, Verbrennungsmaschine oder Elektromaschine, die motorisch oder generatorisch betreibbar ist, verbindbar oder verbunden ist und an einem Ende einen ersten Kupplungsabschnitt aufweist, mit mindestens einer in einem zweiten Lager drehbar angeordneten zweiten Welle, die mit einer Kreiselmaschine verbindbar oder verbunden ist und die an einem Ende einen zweiten Kupplungsabschnitt aufweist, der mit dem wenigstens einen ersten Kupplungsabschnitt der mindestens einen ersten Welle so anordenbar oder angeordnet ist, dass ein Drehmoment von der ersten Welle auf die zweite Welle und/oder umgekehrt übertragbar ist, mit einem Gehäuse, das zumindest das erste Lager der ersten Welle und zumindest das zweite Lager der zweiten Welle stützt und die Kupplungsabschnitte wenigstens teilweise umgibt, und mit einer Kühl- und/oder Schmiervorrichtung zum Zuführen und zum wieder Abführen von Kühl-und/oder Schmiermittel an die Kupplungsabschnitte.

Derartige Getriebe sind bekannt. Sie verwenden als Kühl- und/oder Schmiermittel Öl. Um eine ausreichende Schmierung bzw. Kühlung gewährleisten zu können, müssen mehrere tausend Liter an Öl mitgeführt werden, die im Zuge des Kühlvorgangs bzw. Schmiervorgangs in das Getriebe gefördert und aus diesem wieder entfernt werden. Um ein Austreten des Öls nach Außen an die Umgebung zu verhindern, muss das Kühl- und/oder Schmiersystem abgedichtet sein. Da ein Austreten des Öls zu einer Verschmutzung des Umgebungswasser führen würde, sind die Anforderungen an die Dichtigkeit des Getriebes und dessen Komponenten sehr hoch. Dieses erfordert aufwendige Konstruktionen der einzelnen Komponenten des Getriebes und erweist sich als sehr kostenintensiv. Darüber hinaus sind Besorgung und Entsorgung des Öls mit hohen Kosten verbunden. Schließlich geht für das Aufbewahren des Öls wertvoller Stauraum innerhalb des Wasserfahrzeugs verloren.

Die gattungsmäße US 3,487,805 betrifft ein Propellersystem mit einem röhrenförmigen Kanal, der einen Strömungsdurchgang definiert, einer Propelleranordnung, die mit einem Umfangsrand versehen ist, dessen Innenfläche einen Teil der Wand des Durchgangs definiert, einem Gummilager, das in dem Kanal montiert ist und an der Außenfläche des Randes angreift und diese trägt, wobei das Gummilager mit in Umfangsrichtung beabstandeten Durchgängen ausgebildet ist, die zu der Felge hin offen sind und durch die Wasser strömt, um für eine Schmierung zwischen dem Lager und der Umfangsfelge zu sorgen, und mit einer wassergeschmierten Antriebseinrichtung in der Kammer, um ein Drehmoment auf die Felge auszuüben. Der Kanal ist hierbei mit einer Wasserkammer ausgebildet, die mit allen Durchgängen in Verbindung steht, um das gesamte Gummilager mit Wasser zu schmieren. Mit diesem Propellersystem soll sich ein höherer Propellerwirkungsgrad und ein vereinfachtes Antriebssystem realisieren lassen mit einer zufriedenstellenden radialen und axialen Abstützung und einer zufriedenstellenden Schmierung der Lager und Antriebe.

Aus der GB 2 164 308 A geht eine untere Einheit für eine Schiffsantriebsvorrichtung hervor, wobei die untere Einheit ein Antriebswellengehäuse mit einem unteren Ende, ein Getriebegehäuse, das mit dem unteren Ende des Antriebswellengehäuses verbunden ist, eine Propellerwelle, die sich in dem Getriebegehäuse befindet und sich axial durch dieses erstreckt, Mittel zum drehbaren Lagern der Propellerwelle innerhalb des Getriebegehäuses und ein Element umfasst, das sich in dem Getriebegehäuse befindet, die Propellerwelle umschließt und darin einen offenen Bereich in Verbindung mit der Umgebung außerhalb des Getriebegehäuses, eine Opferanode in dem offenen Bereich und Mittel zum lösbaren Befestigen der Opferanode in dem offenen Bereich umfasst. Mit dieser Einheit soll Schutz vor Korrosion durch galvanische Einwirkung bewirkt werden.

Die WO 2007/109784 A2 stellt ab auf ein Verfahren, um einem Substrat wie ein Zahnrad sowohl Verschleißschutz als auch Korrosionsbeständigkeit zu verleihen, wobei das Verfahren das Versehen des Substrats mit einer Verschleißschutzschicht und einer korrosionsbeständigen Schicht umfasst und wobei die korrosionsbeständige Schicht Nickellegierungen umfassen kann.

Die DE 100 19 516 A1 offenbart ein Getriebe mit Zahnrädern insbesondere für wassergeschmierte Getriebe und Zahnradpumpen, wobei das Zahnrad aus einem druckumgeschmolzenen rostfreien Stahl mit einem Legierungsanteil von mindestens einem Kohlenstoffgehalt von 0,15% bis 0,50%, einem Stickstoffgehalt von 0,2% bis 0,5%, einem Chromgehalt von 13% bis 17% und einem Molybdängehalt von mindestens 0,5% gefertigt ist, dessen Oberfläche durch Eindiffundieren von Kohlenstoff und/oder Stickstoff bei Temperaturen über 600 °C chemisch verändert wird, das Teil einer nachfolgenden Wärmebehandlung (Härten, Abkühlen und anlassen) unterzogen wird, so dass die Oberfläche der Zahnflanken eine Härte von mindestens 61 HRC aufweist. Derartige Zahnräder sollen einerseits eine hohe Oberflächenbelastbarkeit und hohe Biegewechselfestigkeit aufweisen und andererseits eine hohe Korrosionsbeständigkeit besitzen, damit z.B. mit Wasser geschmiert und auch die im Kontakt entstehende Verlustwärme abgeführt werden kann.

Die JP H08 1211 B2 offenbart ein keramisches Lager, enthaltend eine Brucherkennungsvorrichtung, mit einem zylindrischen keramischen Gleitkörper, der durch ein elastisches Element in einem Gehäuse befestigt ist, wobei ein Durchgangsloch in dem elastischen Element vorgesehen ist mit einer Kammer in dem elastischen Element, dem Gleitkörper und dem Gehäuse, wobei ein Kühlwasserversorgungssystem für einen Kühlwassertank zum Zuführen von Kühlwasser zu der Kammer durch ein Rohr mit einem Durchflussmesser verbunden ist.

In der DE 196 29 398 A1 wird ein Wälzlager, insbesondere für die Luft- und Raumfahrt, beschrieben, bestehend aus mindestens einem oder zwei Innenringen, einem Außenring und dazwischen angeordneten Wälzkörpern, wobei mindestens einer der Ringe aus einem druckumgeschmolzenem rostfreien Stahl mit einem Legierungsgehalt von mindestens einem Kohlenstoffgehalt von 0,15% bis 0,50%, einem Stickstoffgehalt von 0,2% bis 0,5% einem Chromgehalt von 13% bis 17%, einem Molybdängehalt von mindestens 0,5% gefertigt ist, dessen Oberfläche durch Eindiffundieren von Kohlenstoff und/oder Stickstoff bei Temperaturen über 600 °C chemisch verändert ist, wobei der gesamte Querschnitt des Ringes einer nachfolgenden Wärmebehandlung (Härten, Abkühlen und Anlassen) unterzogen wird, so dass die Oberfläche der Laufbahn eine Härte von mindestens 61 HRC und Druckeigenspannungen aufweist und der Kern des Ringes eine Härte von 20 bis 56 HRC besitzt. Dieses Wälzlager soll Mangelschmierung, hohe Umfangsspannungen, sehr hohe Drehzahlen und hohe Temperaturen aushalten, rostfrei sein und eine hohe Verschleißfestigkeit und damit eine lange Lebensdauer aufweisen.

Die US 2005/214135 A1 thematisiert eine elektrische Pumpe, die einen bürstenlosen Gleichstrommotor mit Innenrotor verwendet, wobei ein Gehäuse der elektrischen Pumpe durch ein Pumpengehäuse und ein Hauptgehäuse gebildet wird. Eine Sensor-Stator-Baugruppe ist in einem Raum zwischen einem Seitenwandabschnitt des Hauptgehäuses und einer Dose angeordnet und mit Harz abgedichtet. Ein erstes elastisches Dichtungselement ist zudem flüssigkeitsdicht und komprimiert zwischen der Dose und dem Hauptgehäuse angeordnet, und ein zweites elastisches Dichtungselement ist flüssigkeitsdicht und komprimiert zwischen dem Pumpengehäuse und dem Hauptgehäuse angeordnet, wobei das Pumpengehäuse und das Hauptgehäuse aneinander befestigt sind. Ein Lager des bürstenlosen Gleichstrommotors mit Innenrotor kann ein wassergeschmiertes Keramiklager bestehend aus Siliziumnitrid, Siliziumkarbid, Aluminiumoxid oder Reiskleiekeramik sein. Eine in der elektrischen Pumpe zum Einsatz kommende Welle kann z.B. aus einem Nickel-Chrom-Molybdän-Stahl gefertigt sein. Hierbei kann die Oberfläche der Welle mit einer Hartverchromung, einer Nitrierungsbehandlung, einer Titankarbidbeschichtung, einer Titannitridbeschichtung, einer Titanaluminiumnitridbeschichtung oder einer diamantähnlichen Kohlenstoffbeschichtung behandelt sein.

Aufgabe der Erfindung ist daher, ein Getriebe vorzuschlagen, das einfacher baut und bei dem die Kosten reduziert sind.

Die Aufgabe wird durch ein erfindungsgemäßes Getriebe gemäß den Merkmalen des Patentanspruchs 1 gelöst. Der erste Kupplungsabschnitt der ersten Welle und der zweite Kupplungsabschnitt der zweiten Welle sind jeweils mindestens in einem Abschnitt aus wenigstens einem korrosionsfesten Material gebildet oder umfassen ein solches Material.

Grundsätzlich kann Öl als Kühl- und/oder Schmiermittel verwendet werden. Von besonderem Vorteil ist aber, dass bei dem erfindungsgemäßen Getriebe, aufgrund seiner Korrosionsbeständigkeit, auch auf Wasser oder eine wässrige Lösung zurückgegriffen werden kann.

Das erfindungsgemäße Getriebe stellt folglich ein wassergeschmiertes Getriebe dar.

Das Kühl- und/oder Schmiermittel umfasst Wasser oder ein wässriges System. Das wässrige System kann dabei aus einer wässrigen Lösung gebildet sein.

Dadurch, dass das Kühl- und/oder Schmiermittel Wasser oder eine wässrige Lösung umfasst, kann von einer aufwändigen Abdichtung der Kühl- und/oder Schmiervorrichtung abgesehen werden. Darüber hinaus kann bei dem Kühl- und/oder Schmiermittel auf Umgebungswasser zurückgegriffen werden, das das erste Getriebe umgibt. Ein Vorsehen von Stauraum für das Kühl- und/oder Schmiermittel innerhalb des Wasserfahrzeugs ist daher nicht mehr erforderlich.

Bevorzugt handelt es sich bei dem ersten Getriebe um eines, dass derart ausgelegt ist, Leistungen von größer als 111 kW, bevorzugt Leistungen von größer oder gleich 500 kW, bevorzugt Leistungen von größer oder gleich 1000 kW oder sogar von größer oder gleich 10.000 kW zu übertragen.

Das Gehäuse kann den ersten Kupplungsabschnitt und/oder den zweiten Kupplungsabschnitt in Gänze oder nur abschnittsweise umgeben. Letzterenfalls kann das Gehäuse zum Beispiel lediglich als Rahmen, Gestell oder Träger, insbesondere Tragarm, ausgebildet sein, das das erste Lager und/oder das zweite Lager stützt.

Die erste Welle und/oder die zweite Welle, sowie das erste Lager und/oder das zweite Lager können aus einem beliebigen Material gebildet sein. Dieses kann bspw. Edelstahl umfassen oder aber einen herkömmlichen Stahl umfassen, insbesondere einen ferritischen Stahl.

Es erweist sich als vorteilhaft, wenn der erste Kupplungsabschnitt und der zweite Kupplungsabschnitt jeweils mindestens ein Zahnrad umfassen, gebildet aus oder umfassend mindestens einem korrosionsfesten Hartmetallwerkstoff in Form eines gesinterten Carbidhartmetalls.

Unter nichtrostende Stähle sollen solche Stähle verstanden werden, mit einem hohen Chromanteil, vorzugsweise von mehr als 10,5 %. Chrom ist hier vorzugsweise im austenitischen oder ferritischen Mischkristall gelöst. Nichtrostende Stähle umfassen auch solche, die zusätzlich als Legierungsbestandteile Nickel, Molybdän, Mangan und/oder Niob enthalten. Geeignete nichtrostende Stähle umfassen zum Beispiel die Legierung X5CrNi18-10 (Werkstoffnummer 1.4301) und X2CrNi18-9 (Werkstoffnummer 1.4307) sowie insbesondere auch X6CrNiMoTi17-12-2 (Werkstoffnummer 1.4571) und X2CrNiMo17-12-2 (Werkstoffnummer 1.4404). Weitere nichtrostende Stähle umfassen die Typen X30Cr13 und X50CrMoV15 sowie X2CrNiMoN22-5-3 (Werkstoffnummer 1.4462), X2CrTi12 (Werkstoffnummer 1.4512), X2CrTiNb18 (Werkstoffnummer 1.4509) und X3CrTi17 (Werkstoffnummer 1.4510). Darüber hinaus kommen als korrosionsbeständige Materialien für das Getriebe auch Chrom-Nickel-Legierungen in Betracht, die weniger als 50 % Eisen enthalten, beispielsweise der Legierungstyp NiCr8020.

In einer Ausführungsform wird als bevorzugte nichtrostende Stähle auf austenitische Stähle zurückgegriffen. Bei austenitischen Stählen liegen γ-Kristalle von Eisenlegierungen vor. Als geeignete Austenitbildner sind Elemente wie Nickel, Kobalt, Kohlenstoff und Mangan bekannt.

Das Zahnrad kann also in Gänze einen korrosionsfesten Werkstoff umfassen oder aber lediglich die Zahnflanken mit einem solchen beschichtet sein. Hierdurch wird erreicht, dass bei Betrieb des ersten Getriebes die wesentlichen, Verschleiß ausgesetzten Komponenten des ersten Getriebes gegen Korrosion geschützt sind, was zu einem Reduzieren des Verschleißes des ersten Getriebes führt.

Bei einer alternativen Weiterbildung des letztgenannten Erfindungsgedankens ist vorgesehen, dass der erste Kupplungsabschnitt und/oder der zweite Kupplungsabschnitt mindestens jeweils eine Schnecke mit jeweils mindestens einem Schneckenrad umfassen, gebildet aus oder umfassend mindestens einem korrosionsfesten Hartmetallwerkstoff in Form eines gesinterten Carbidhartmetalls.

Die Kupplungsabschnitte können grundsätzlich beliebig geformt sein, wenn sie derart zusammenwirken, dass ein Drehmoment von der ersten Welle auf die zweite Welle und umgekehrt übertragbar ist. Dieses kann grundsätzlich mechanisch oder magnetisch erfolgen. Die Kupplungsabschnitte können im Falle einer mechanischen Übertragung von Drehmomenten grundsätzlich beliebig ausgeformt sein, solange sie mit der Geometrie des anderen Kupplungsabschnitts beim Übertragen der Kräfte einen Hinterschnitt bilden. Bevorzugt sind die Kupplungsabschnitte komplementär zueinander ausgebildet.

In Weiterbildung der Erfindung erweist es sich als vorteilhaft, wenn das erste Lager und/oder das zweite Lager einem korrosionsfesten Stahl und/oder mindestens einem nichtrostenden Stahl, insbesondere austenitischen Stahl, umfassen, der gehärtet oder verfestigt ist, insbesondere durch Nitrieren, Wandaufstickung, Kaltverfestigung, insbesondere Kugelstrahlen, oder dergleichen. Solchenfalls ist gewährleistet, dass das erfindungsgemäße Getriebe auch zum Übertragen von hohen Drehmomenten einsetzbar ist.

Die Geometrie der einzelnen Zähne der Zahnräder der Kupplungsabschnitte kann grundsätzlich beliebig gewählt werden. Beispielsweise ist eine Polygonverzahnung denkbar. Allerdings wird bevorzugt, die Anzahl der Zähne und die Geometrie der Zähne an die jeweilige Belastung sowie an das Kühl- und/oder Schmiermittel anzupassen. Wasser oder wässrige Lösungen besitzen eine geringere Zähigkeit (Viskosität) als Öle und lassen sich hierdurch bedingt, leichter auf einer Oberfläche verteilen. Darüber hinaus ist es denkbar, dass der erste Kupplungsabschnitt und der zweite Kupplungsabschnitt jeweils eine voneinander abweichende Anzahl an Zähnen aufweisen sowie dass die einzelnen Zähne der beiden Kupplungsabschnitte in Ihrer Geometrie voneinander abweichen. Ferner können die jeweiligen Zahnräder des ersten Kupplungsabschnitts und des zweiten Kupplungsabschnitts in Größe und Durchmesser voneinander abweichen oder gleich gebildet sein.

Bei einer Weiterbildung des erfindungsgemäßen Getriebes ist vorgesehen, dass die Kühl-und/oder Schmiervorrichtung eine mindestens eine Pumpe umfassende Zuführeinheit aufweist, bei der das Kühl- und/oder Schmiermittel an oder zwischen die Kontaktflächen des ersten Kupplungsabschnitts und des zweiten Kupplungsabschnitts und an die Gleitlagerflächen des ersten Lagers und/oder des zweiten Lagers zum hydrostatischen und/oder hydrodynamischen Schmieren förderbar ist.

Grundsätzlich ist es bei einer Ausführungsform denkbar, dass das erste Lager und/oder das zweite Lager hydrostatisch geschmiert werden. Hierfür kann solchenfalls eine Steuerung und/oder Regelung vorgesehen sein. Allerdings erweist es sich als kostengünstig, wenn das erste Lager und/oder das zweite Lager hydrodynamisch geschmiert werden. Beim hydrodynamischen Schmieren wird das Kühl- und/oder Schmiermittel durch die miteinander in Kontakt tretenden Bauteile auf der Oberfläche verteilt.

Darüber hinaus können auch der erste Kupplungsabschnitt und/oder der zweite Kupplungsabschnitt hydrostatisch und/oder hydrodynamisch geschmiert werden.

Zum Kühlen des ersten Lagers und/oder des zweiten Lagers kann eine Kühlung mittels Wärmeleitung erfolgen. Hierbei sind die Lager mit einem Material mit hoher Wärmeleitfähigkeit verbunden, das die Wärme abtransportiert und beispielsweise an die Umgebung abgibt. Um bei hohen Drehzahlen ein Überhitzen zu vermeiden wird bevorzugt, zusätzlich durch Einpressen von Kühl- und/oder Schmiermittel in das erste Lager und/oder zweite Lager konvektiv zu kühlen. Vorteilhafter Weise wird hierdurch, neben der konvektiven Kühlung der Lager, auch eine Schmierung derselben erzielt.

Dieses gilt in gleicher Weise für den ersten Kupplungsabschnitt und/oder den zweiten Kupplungsabschnitt, der sowohl durch das Hinzuführen des Kühl- oder Schmiermittels konvektiv gekühlt wird, aber auch zusätzlich mittels Wärmeleitung nach Außen kühlbar ist.

Grundsätzlich kann bei dem Kühl- und/oder Schmiermittel auch auf ein mitgeführtes Wasser oder eine mitgeführte wässrigen Lösung zurückgegriffen werden. Es erweist sich allerdings als zweckmäßig, wenn das Schmiermittel Umgebungswasser umfasst, insbesondere Flusswasser oder Meereswasser. Hierdurch steht dem Getriebe ein nahezu unbegrenztes Reservoir an Kühl- und/oder Schmiermittel zur Verfügung.

Das Kühl- und/oder Schmiermittel kann unaufbereitetes Umgebungswasser umfassen. Es erweist sich aber als vorteilhaft, wenn die Kühl- und/oder Schmiervorrichtung eine Aufbereitungseinheit umfasst, mit der dem Kühl- und/oder Schmiermittel ein Zusatz hinzufügbar ist, der insbesondere Frostschutzmittel, Glykole, Seife oder ein sonstiges das Kühl- und/oder Schmiermittel entspannendes Mittel umfasst.

Hierdurch wird gewährleistet, dass das Kühl- und/oder Schmiermittel nah an die Oberfläche der ersten Kupplungsvorrichtung und/oder der zweiten Kupplungsvorrichtung sowie des ersten Lagers und/oder des zweiten Lagers gelangt, insbesondere auch dann, wenn diese Oberfläche hydrophobe Eigenschaften besitzt.

Grundsätzlich kann das Kühl- und/oder Schmiermittel, wenn es sich um Umgebungswasser handelt, dem ersten Kupplungsabschnitt und/oder dem zweiten Kupplungsabschnitt und/oder dem ersten Lager und/oder dem zweiten Lager ohne weitere Aufbereitung zugeführt werden. In Weiterbildung letztgenannten Erfindungsgedankens erweist es sich jedoch als vorteilhaft, wenn die Aufbereitungseinheit der Kühl- und/oder Schmiervorrichtung derart ausgebildet ist, dass mit ihr das Kühl- und/oder Schmiermittel, insbesondere mittels eines Filters, filterbar und/oder reinigbar ist, insbesondere demineralisierbar und/oder deionisierbar ist.

Hierdurch wird erreicht, dass, wenn auf Umgebungswasser zurückgegriffen wird, dieses derart aufbereitet wird, dass Verschmutzungen, die das Getriebe beschädigen könnten, herausgefiltert werden. Darüber hinaus ist die Korrosionsfähigkeit des Getriebes weiter herabgesetzt und die Lebensdauer erhöht, wenn das Kühl- und/oder Schmiermittel demineralisiert oder deionisiert ist.

Das erste Getriebe kann an beliebiger Stelle angeordnet sein, insbesondere außerhalb des Umgebungswassers. Solchenfalls wird das Kühl- und/oder Schmiermittel an das erste Getriebe gefördert.

Grundsätzlich kann die Kühl- und/oder Schmiervorrichtung ähnlich wie bei einer Kühl-und/oder Schmiervorrichtung, die Öl verwendet, ausgebildet sein. Allerdings erweist sich eine einfache Ausbildung der Kühl-/Schmiervorrichtung als zweckmäßig, wenn das erste Getriebe im Umgebungswasser angeordnet ist, die durch mindestens eine erste Öffnung im Gehäuse, durch die Umgebungswasser einströmbar ist, und durch mindestens eine zweite Öffnung im Gehäuse, durch die das Umgebungswasser wieder ausströmbar ist, gebildet ist. Solchenfalls ist die Kühl- und/oder Schmiervorrichtung einfach und kostengünstig als Tauschschmierung ausgebildet, wobei auf Zuleitung und Pumpen der Kühl- und/oder Schmiervorrichtung verzichtet werden kann.

Bei einer Weiterbildung des erfindungsgemäßen Getriebes ist vorgesehen, dass das erste Lager und/oder das zweite Lager aus Keramik und/oder einem faserverstärkten keramischen Werkstoff und/oder einem korrosionsfesten Hartmetallwerkstoff in Form eines gesinterten Carbidhartmetalls gebildet ist oder das zumindest die jeweilige Lagerfläche mindestens eine Beschichtung aufweist, die aus Keramik und/oder aus mindestens einem faserverstärkten keramischen Werkstoff und/oder mindesten einem korrosionsfesten Hartmetallwerkstoff in Form eines gesinterten Carbidhartmetalls gebildet ist.

Das erste Lager und/oder das zweite Lager können aus einem beliebigen Lagermaterial gebildet sein. Es erweist sich als vorteilhaft, wenn das erste Lager und/oder das zweite Lager ein Wälzlager oder ein Gleitlager umfasst, das aus Kunststoff, Gummi, Bronze und/oder Stahl gebildet ist.

Das Gehäuse kann grundsätzlich beliebig gebildet sein. Beispielsweise kann das Gehäuse lediglich eine Aufnahme für das erste Lager und/oder das zweite Lager bilden. Darüber hinaus kann das Gehäuse auch derart ausgebildet sein, dass es den ersten und den zweiten Kupplungsabschnitt vollständig gegenüber der Umgebung abgrenzt.

Darüber hinaus kann das Gehäuse aus einem beliebigen Material gebildet sein. Es wird allerdings bevorzugt, wenn das Gehäuse aus einem Kunststoff, einem faserverstärkten Kunststoff oder einem Kunststoff mit Stahleinlage gebildet ist. Solchenfalls ist das Gehäuse korrosionsfest und stabil ausgebildet.

Bei dem Getriebe kann es sich grundsätzlich um ein Winkelgetriebe oder um ein Verteilergetriebe handeln, bei dem entweder das Drehmoment um einen bestimmten Winkel umgelenkt wird oder aber das Drehmoment an zwei oder mehrere Wellen übertragen wird. Darüber hinaus kann das erste Getriebe in oder an einem Ruderpropeller, Z-Drive oder Azimuth-Thruster angeordnet sein.

Wenn das erfindungsgemäße Getriebe ein Verteilergetriebe umfasst, erweist es sich als vorteilhaft, dass mindestens eine erste Welle und mindestens zwei zweite Wellen vorgesehen sind, die insbesondere symmetrisch bezüglich der ersten Welle angeordnet sind und jeweils mit der ersten Welle - bezüglich ihrer Drehachsen - einen Winkel von 0 bis 90°, bevorzugt von 0 bis 60°, bevorzugt von 0 bis 45°, einschließen.

Darüber hinaus ist es denkbar, dass sowohl die erste Welle als auch die zweiten Wellen bezüglich ihrer Anstellung zueinander als auch bezüglich der Wasseroberfläche verstellbar sind, insbesondere auch während des Betriebs des erfindungsgemäßen Getriebes.

Wenn das erfindungsgemäße Getriebe ein Winkelgetriebe umfasst, erweist es sich als vorteilhaft, wenn es mindestens eine erste Welle und mindestens eine zweite Welle aufweist, die bezüglich ihrer Drehachsen einen Winkel von 0 bis 90°, bevorzugt von 0 bis 60°, bevorzugt von 0 bis 45°, miteinander einschließen.

Bei dem erfindungsgemäßen Getriebe kann in einer weiteren Ausführungsform vorgesehen sein, dass in der Kühl- und/oder Schmiervorrichtung ein Korrosionselement angeordnet ist, das einen metallischen Werkstoff umfasst, dessen Neigung zur Korrosion zumindest höher ist als die Neigung zur Korrosion zumindest eines Abschnitts der ersten Welle und/oder der zweiten Welle und/oder der Energievorrichtung und/oder des ersten Kupplungsabschnitts der ersten Welle und/oder des zweiten Kupplungsabschnitts der zweiten Welle und/oder des ersten Lagers und/oder des zweiten Lagers.

Solchenfalls können das erste Lager und/oder das zweite Lager einen, insbesondere ferritischen, Stahl umfassen. Durch das Korrosionselement ist die Korrosionsfähigkeit der Getriebeteile reduziert.

In einer weiteren Ausführungsform kann das erfindungsgemäße Getriebe, insbesondere für ein Wasserfahrzeug, mit mindestens einer in einem ersten Lager drehbar angeordneten ersten Welle, die einerseits mit einer Energievorrichtung, insbesondere Hydraulikmaschine, Verbrennungsmaschine oder Elektromaschine, die motorisch oder generatorisch betreibbar ist, verbindbar oder verbunden ist und die andererseits mit einer Kreiselmaschine verbindbar oder verbunden ist, sowie mit einem Gehäuse, das zumindest das erste Lager der ersten Welle stützt und wenigstens teilweise umgibt, und mit einer Kühl- und/oder Schmiervorrichtung zum Zuführen und zum wieder Abführen von Kühl- und/oder Schmiermittel an das erste Lager und/oder an die erste Welle ausgestattet sein, wobei die erste Welle oder das erste Lager jeweils mindestens in einem Abschnitt aus wenigstens einem korrosionsfesten Material gebildet sind oder ein solches Material umfassen oder jeweils mindestens in einem Abschnitt mindestens eine vor Korrosion schützende Beschichtung aufweisen.

Bevorzugt ist die Energievorrichtung durch eine Elektromaschine gebildet, die auf der ersten Welle angeordnet ist. Sie weist einen Stator und einen Rotor auf. Der Rotor ist durch einen Abschnitt der ersten Welle gebildet, wobei der Stator bevorzugt drehfest am Gehäuse angeordnet ist.

Zum Kühlen der Energievorrichtung wird Kühl- und/oder Schmiermittel zwischen Rotor und Stator geführt.

Darüber hinaus wird die Aufgabe gelöst durch ein erfindungsgemäßes Verfahren zum Betreiben eines erfindungsgemäßen Getriebes mit den Schritten:
- Ansaugen eines durch Wasser oder eine wässrige Lösung gebildeten Kühl- und/oder Schmiermittels aus der Umgebung,
- ggf. Filtern und/oder Reinigen des Kühl- und/oder Schmiermittels,
- ggf. Beaufschlagen des Kühl- und/oder Schmiermittels mit Druck mittels einer Pumpe,
- Zuführen des Kühl- und/oder Schmiermittels durch eine Zuführeinheit an einen ersten Kupplungsabschnitt und an einen zweiten Kupplungsabschnitt,
- Abführen des Kühl- und/oder Schmiermittels zurück an die Umgebung.

Das erfindungsgemäße wassergeschmierte Getriebe ermöglicht einen kostengünstigeren Betrieb als die vorbekannten ölgeschmierten Getriebe. Dieses wird zum einen dadurch erzielt, dass auf das Mitführen teuren Öls verzichtet werden kann. Zum anderen, wird Raum für Nutzlasten innerhalb des Wasserfahrzeugs gewonnen, der vormals für die Speicherung des Öls vorgesehen werden musste.

Darüber hinaus erlaubt das erfindungsgemäße Getriebe eine Bauweise, die den hohen Dichtigkeitsanforderungen eines ölbetriebenen Getriebes nicht standhalten muss, da ein Austritt des als Kühl- und/oder Schmiermittels verwendeten Wassers zu keiner Verschmutzung der Umwelt führt.

Weitere Merkmale, Einzelheiten und Vorteile der Erfindung ergeben sich aus den beigefügten Patentansprüchen und der zeichnerischen Darstellung und nachfolgender Beschreibung einer Ausführungsform der Erfindung.

In der Zeichnung zeigt:
- Figur 1: eine schematische Darstellung einer ersten Ausführungsform des erfindungsgemäßen Getriebes;
- Figur 2: eine schematische Darstellung einer weiteren Ausführungsform des erfindungsgemäßen Getriebes.

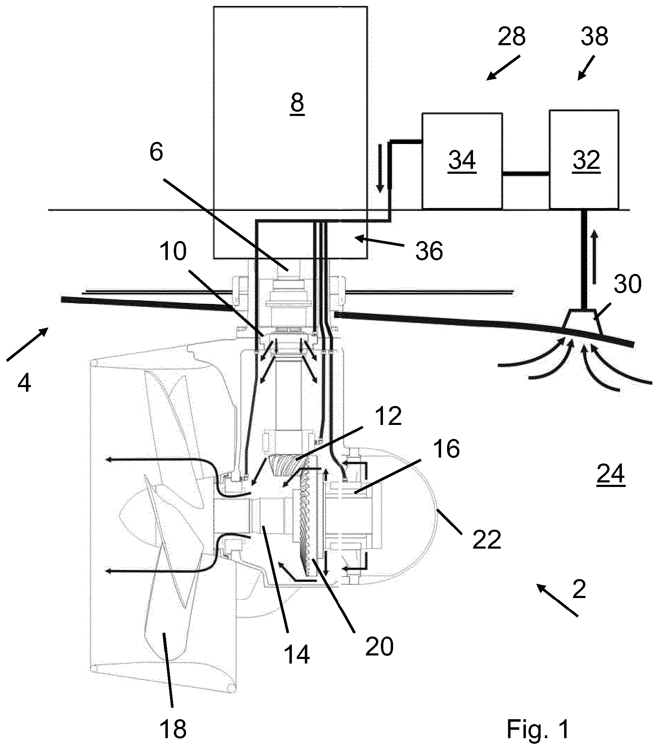

Figur 1 zeigt ein insgesamt mit dem Bezugszeichen 2 versehenes erfindungsgemäßes Getriebe, das an einem Wasserfahrzeug 4 angeordnet ist. Das Wasserfahrzeug 4 ist lediglich schematisch und nur in einem Bereich dargestellt, an dem das Getriebe 2 angeordnet ist.

Das Getriebe 2 umfasst eine erste Welle 6 die mit einer Energievorrichtung 8 verbindbar ist. Die Energievorrichtung 8 kann dabei sowohl eine Verbrennungsmaschine oder Elektromaschine umfassen, wobei letztere sowohl motorisch als auch generatorisch betreibbar sein kann. Die erste Welle 6 ist in einem ersten Lager 10 drehbar gelagert. Die erste Welle 6 weist an einem Ende einen ersten Kupplungsabschnitt 12 auf, der bei dem in der Figur gezeigten Ausführungsbeispiel ein Zahnrad umfasst.

Das Getriebe 2 weist darüber hinaus eine zweite Welle 14 auf, die mit einer als Propeller ausgebildeten Kreiselmaschine 18 verbunden ist. Die zweite Welle 14 ist in einem zweiten Lager 16 drehbar gelagert und weist an ihrem freien Ende einen zweiten Kupplungsabschnitt 20 auf, der aus einem Zahnrad gebildet ist. Das Zahnrad des ersten Kupplungsabschnitts 12 und das Zahnrad des zweiten Kupplungsabschnitts 20 sind dabei komplementär ausgebildet, so dass die Zähne des ersten Kupplungsabschnitts 12 mit den Zähnen des zweiten Kupplungsabschnitts 20 kämmen können.

Erster Kupplungsabschnitt 12 und zweiter Kupplungsabschnitt 20 sind bei dem in der Figur dargestellten Ausführungsbeispiel im Wesentlichen in einem rechten Winkel zueinander angeordnet, so dass ein Drehmoment von der Energievorrichtung 8 über die erste Welle 6 mittels des ersten Kupplungsabschnitts 12 auf den zweiten Kupplungsabschnitt 20 der zweiten Welle 14 und dadurch auf die als Propeller ausgebildete Kreiselmaschine 18 übertragbar ist.

Darüber hinaus umfasst das Getriebe 2 ein Gehäuse 22, das bei dem gezeigten Ausführungsbeispiel den ersten Kupplungsabschnitt 12 und den zweiten Kupplungsabschnitt 20 gegenüber Umgebungswasser 24 abschirmt. In dem Gehäuse 22 sind das erste Lager 10 und das zweite Lager 16 gestützt. Zum Zuführen und zum Wiederabführen von Kühl- und/oder Schmiermittel 26 an die Kupplungsabschnitte 12, 20 ist eine Kühl- und/oder Schmiervorrichtung 28 innerhalb des Wasserfahrzeugs vorgesehen. Das Kühl- und/oder Schmiermittel 26 umfasst Umgebungswasser 24. Zumindest der erste Kupplungsabschnitt 12 und/oder der zweite Kupplungsabschnitt 20 der zweiten Welle 14 und/oder das erste Lager 16 und/oder das zweite Lager 16 sind aus einem korrosionsfesten Material gebildet oder weisen einen Abschnitt mit einer vor Korrosion schützenden Beschichtung auf.

Im Folgenden wird auf die einzelnen Komponenten des Getriebes 2 näher eingegangen:
Bei dem in Figur 1 gezeigten Ausführungsbeispiel umfassen der erste Kupplungsabschnitt 12 und der zweite Kupplungsabschnitt 20 jeweils ein Zahnrad, das aus einem korrosionsfesten Material gebildet ist. Solchenfalls kann das Material einen korrosionsfesten Hartmetallwerkstoff umfassen.

Alternativ können anstelle der Zahnräder aber auch Schnecken mit jeweils einem Schneckenrad vorgesehen sein, die solchenfalls ebenfalls aus einem korrosionsfesten Material gebildet sind.

An den ersten Kupplungsabschnitt 12 sowie an den zweiten Kupplungsabschnitt 20 wird mittels der Kühl- und/oder Schmiervorrichtung 28 Kühl- und/oder Schmiermittel 26 zugeführt. Bei dem in Figur 1 gezeigten Ausführungsbeispiel sind der erste Kupplungsabschnitt 12 sowie der zweite Kupplungsabschnitt 20 in Gänze von Kühl- und/oder Schmiermittel 26 umgeben. Hierdurch wird Wärme an das Kühl- und/oder Schmiermittel 26 übergeben und durch dieses abgeführt. Darüber hinaus wird zwischen dem ersten Kupplungsabschnitt 12 und dem zweiten Kupplungsabschnitt 20 beim Betrieb des Getriebes 2 ein hydrodynamischer Tragfilm ausgebildet.

Das die erste Welle 6 drehend lagernde erste Lager 10 und das die zweite Welle 14 drehend lagernde zweite Lager 16 umfassen ebenfalls entweder in Gänze ein korrosionsfestes Material oder aber zumindest an ihren Gleitlagerflächen eine derartige Beschichtung. Das korrosionsfeste Material kann dabei aus korrosionsfestem Stahl gebildet sein. Dieser ist bevorzugt gehärtet oder verfestigt, wobei hierfür grundsätzlich, Randaufstickung und Kaltverfestigung wie Kugelstrahlen geeignet sind.

Die Kühl- und/oder Schmiervorrichtung 28 ist sowohl mit dem ersten Lager 10 als auch mit dem zweiten Lager 16 derart verbunden, dass Kühl- und/oder Schmiermittel 26 in die Gleitlagerflächen hineinpressbar ist. Hierdurch wird eine hydrodynamische Schmierung erzielt. Allerdings ist es auch denkbar, eine Vielzahl an Verbindungen zwischen Kühl- und Schmiermittelvorrichtungen 28 und dem ersten Lager 10 sowie dem zweiten Lager 16 vorzusehen, die mittels einer Steuerung steuerbar ist, so dass ein hydrostatischer Tragfilm ausbildbar ist.

Die Kühl- oder Schmiervorrichtung 28 weist darüber hinaus eine Ansaugstelle 30 auf, die Umgebungswasser 24 ansaugt. Das Umgebungswasser 24 wird dann einem Filter 32 zugeführt und in diesem gereinigt. Das Reinigen des Umgebungswassers 24 kann dabei auch ein Demineralisieren sowie ein Deionisieren des Umgebungswassers 24 umfassen. Um das Umgebungswasser 24 anzusaugen und dem ersten Lager 10, dem zweiten Lager 16 sowie dem ersten Kupplungsabschnitt 12 und dem zweiten Kupplungsabschnitt 20 durch Leitungen 36 zuzuführen, ist eine Pumpe 34 vorgesehen, die stromab des Filters 32 angeordnet ist.

Bei dem in Figur 1 gezeigten erfindungsgemäßen Getriebe 2 mit der Kreiselmaschine 18 ist sowohl ein Einsatz motorisch als auch generatorisch denkbar.

Besonderer Vorteil des erfindungsgemäßen Getriebes 2 ist, dass kein zusätzliches Kühl- und/oder Schmiermittel 26 im Wasserfahrzeug 4 vorgesehen werden muss. Dadurch, dass auf Umgebungswasser 24 zurückgegriffen werden kann, sind die Dichtigkeitsanforderungen an das Gehäuse 22 des Getriebes 2 sehr gering, wodurch das erste Getriebe 2 einfach und kostengünstig herstellbar ist.

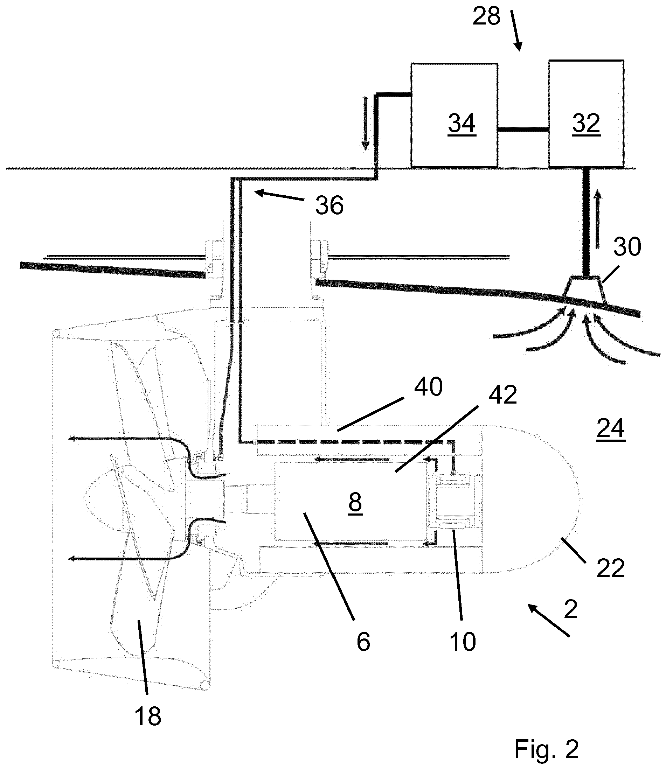

Figur 2 zeigt eine Ausführungsform deserfindungsgemäßen Getriebes 2, bei dem die Energievorrichtung 8 an der ersten Welle 6 angeordnet ist. Bei der Energievorrichtung 8 handelt es sich bei dem dargestellten Ausführungsbeispiel um eine Elektromaschine, die einen Stator 40 und einen Rotor 42 umfasst. Der Rotor 42 ist durch einen Abschnitt an der ersten Welle 6 gebildet. Der Stator 40 ist drehfest mit dem Gehäuse 22 verbunden.

Die erste Welle 6 ist mit ihrem anderen Ende mit der Kreiselmaschine 18 verbunden.

Der Betrieb dieser Ausführungsform des erfindungsgemäßen Getriebes entspricht im Wesentlichen dem Betrieb des erfindungsgemäßen Getriebes gemäß Figur 1. Allerdings wird die von der Energievorrichtung erzeugte Energie nicht mittels Kupplungsabschnitte von der ersten Welle 6 auf die zweite Welle 14 übertragen, sondern unmittelbar auf die Kreiselmaschine 18 übertragen.

Zum Kühlen der ersten Welle 6, der Energievorrichtung 8 und des ersten Lagers 10 wird Kühl- und/oder Schmiermittel 26 aus der Umgebung mittels der Pumpe 34 angesaugt. Hierbei wird des Kühl- und/oder Schmiermittel durch den Filter 32 gereinigt und durch die Leitungen 36 zugeführt.

Hierbei fliest das Kühl- und/oder Schmiermittel durch das erste Lager 10. Anschließend wird es zwischen Stator 40 und Rotor 42 in Richtung auf die Kreiselmaschine 18 geführt, wo es wieder der Umgebung zurückgeführt wird.

## Patentansprüche

1. Getriebe (2) mit mindestens einer in einem ersten Lager (10) drehbar angeordneten ersten Welle (6), die mit einer Energievorrichtung (8), Verbrennungsmaschine oder Elektromaschine, die motorisch oder generatorisch betreibbar ist, verbindbar oder verbunden ist und an einem Ende einen ersten Kupplungsabschnitt (12) aufweist, mit mindestens einer in einem zweiten Lager (16) drehbar angeordneten zweiten Welle (14), die mit einer Kreiselmaschine (18) verbindbar oder verbunden ist und die an einem Ende einen zweiten Kupplungsabschnitt (20) aufweist, der mit dem wenigstens einen ersten Kupplungsabschnitt (12) der mindestens einen ersten Welle (6) so anordenbar oder angeordnet ist, dass ein Drehmoment von der ersten Welle (6) auf die zweite Welle (14) und/oder umgekehrt übertragbar ist,
mit einem Gehäuse (22), das zumindest das erste Lager (10) der ersten Welle (6) und zumindest das zweite Lager (16) der zweiten Welle (14) stützt und
die Kupplungsabschnitte (12, 20) wenigstens teilweise umgibt, und
mit einer Kühl- und/oder Schmiervorrichtung (28) zum Zuführen und zum wieder Abführen von Kühl- und/oder Schmiermittel (26) an die Kupplungsabschnitte (12, 20),
der erste Kupplungsabschnitt (12) der ersten Welle (6) und der zweite Kupplungsabschnitt (20) der zweiten Welle (14) jeweils mindestens in einem Abschnitt aus wenigstens einem korrosionsfesten Material gebildet sind oder ein solches Material umfassen;
dass das Kühl- und/oder Schmiermittel (26) Wasser oder ein wässriges System umfasst dadurch gegengezeichnet , dass dass das korrosionsfeste Material mindestens einen korrosionsfesten Hartmetallwerkstoff in Form eines gesinterten Carbidhartmetalls umfasst.

2. Getriebe (2) nach Anspruch 1, **dadurch gekennzeichnet, dass**
der erste Kupplungsabschnitt (12) und der zweite Kupplungsabschnitt (20) jeweils mindestens ein Zahnrad umfassen, gebildet aus oder umfassend mindestens einen korrosionsfesten Hartmetallwerkstoff in Form eines gesinterten Carbidhartmetalls.

3. Getriebe (2) nach Anspruch 1 oder 2, **dadurch gekennzeichnet, dass** der erste Kupplungsabschnitt (12) und/oder der zweite Kupplungsabschnitt (20) jeweils mindestens eine Schnecke mit jeweils mindestens einem Schneckenrad umfassen, gebildet aus oder umfassend mindestens einen korrosionsfesten Hartmetallwerkstoff in Form eines gesinterten Carbidhartmetalls.

4. Getriebe (2) nach einem oder mehreren der vorhergehenden Ansprüche, **dadurch gekennzeichnet, dass**
die Kühl- und/oder Schmiervorrichtung (28) eine mindestens eine Pumpe (34) umfassende Zuführeinheit (36) aufweist, mit der das Kühl- und/oder Schmiermittel (26) an oder zwischen die Kontaktflächen des ersten Kupplungsabschnitts (12) und des zweiten Kupplungsabschnitts (20) und an die Gleitlagerflächen des ersten Lagers (10) und/oder des zweiten Lagers (16) zum hydrostatischen und/oder hydrodynamischen Schmieren förderbar ist.

5. Getriebe (2) nach einem oder mehreren der vorhergehenden Ansprüche, **dadurch gekennzeichnet, dass**
die Kühl- und/oder Schmiervorrichtung (28) durch mindestens eine erste Öffnung im Gehäuse (22), durch die Umgebungswasser (24) einströmbar ist, und durch mindestens eine zweite Öffnung im Gehäuse (22), durch die das Umgebungswasser (24) wieder ausströmbar ist, gebildet ist.

6. Getriebe (2) nach einem oder mehreren der vorhergehenden Ansprüche, **dadurch gekennzeichnet, dass**
das erste Lager (10) und/oder das zweite Lager (16) aus Keramik und/oder aus einem faserverstärkten keramischen Werkstoff und/oder einem korrosionsfesten Hartmetallwerkstoff in Form eines gesinterten Carbidhartmetalls gebildet ist oder das zumindest die jeweilige Lagerfläche eine Beschichtung aufweist, die aus Keramik und/oder aus mindestens einem faserverstärkten keramischen Werkstoff und/oder aus mindestens einem korrosionsfesten Hartmetallwerkstoff in Form eines gesinterten Carbidhartmetalls gebildet ist.

7. Getriebe (2) nach einem oder mehreren der vorhergehenden Ansprüche, **dadurch gekennzeichnet, dass**
das erste Lager (10) und/oder das zweite Lager (16) ein Wälzlager oder ein Gleitlager umfasst, das aus Kunststoff, Gummi, Bronze und/oder nichtrostendem Stahl, insbesondere austenitischem Stahl, gebildet ist.

8. Getriebe (2) nach einem oder mehreren der vorhergehenden Ansprüche, **dadurch gekennzeichnet, dass**
das Gehäuse (22) aus einem Kunststoff, einem faserverstärkten Kunststoff und/oder einem Kunststoff mit Stahleinlage gebildet ist.

9. Getriebe (2) nach einem der Ansprüche 1 bis 8, **dadurch gekennzeichnet, dass** in der Kühl- und/oder Schmiervorrichtung (28) ein Korrosionselement angeordnet ist, das einen metallischen Werkstoff umfasst, dessen Neigung zur Korrosion zumindest höher ist als die Neigung zur Korrosion zumindest eines Abschnitts der ersten Welle (6) und/oder der zweiten Welle und/oder der Energievorrichtung (8) und/oder des ersten Kupplungsabschnitts (12) der ersten Welle (6) und/oder des zweiten Kupplungsabschnitts (20) der zweiten Welle (14) und/oder des ersten Lagers (10) und/oder des zweiten Lagers (16).

10. Getriebe (2) nach Anspruch 9, **dadurch gekennzeichnet, dass** das Korrosionselement einen ferritischen Werkstoff umfasst.

11. Getriebe (2) nach einem der Ansprüche 1 bis 10, mit mindestens einer in einem ersten Lager (10) drehbar angeordneten ersten Welle (6), die einerseits mit einer Energievorrichtung (8), Verbrennungsmaschine oder Elektromaschine, die motorisch oder generatorisch betreibbar ist, verbindbar oder verbunden ist und die andererseits mit einer Kreiselmaschine (18) verbindbar oder verbunden ist, mit einem Gehäuse (22), das zumindest das erste Lager (10) der ersten Welle (6) stützt und wenigstens teilweise umgibt und mit einer Kühl- und/oder Schmiervorrichtung (28) zum Zuführen und zum wieder Abführen von Kühl- und/oder Schmiermittel (26) an das erste Lager (10) und/oder an die erste Welle (6),
**dadurch gekennzeichnet, dass**
die erste Welle (6) oder das erste Lager (10) jeweils mindestens in einem Abschnitt aus wenigstens einem korrosionsfesten Material gebildet sind oder ein solches Material umfassen oder jeweils mindestens in einem Abschnitt mindestens eine vor Korrosion schützende Beschichtung aufweisen.

12. Getriebe (2) nach einem oder mehreren der vorhergehenden Ansprüche, **dadurch gekennzeichnet, dass**
dieses ein Getriebe für ein Wasserfahrzeug darstellt.

13. Verfahren zum Betreiben eines Getriebes (2) nach einem der Ansprüche 1 bis 12, mit den Schritten:
- Ansaugen eines durch Wasser oder eine wässrige Lösung gebildeten Kühl- und/oder Schmiermittels (26) aus der Umgebung,
- ggf. Filtern und/oder Reinigen des Kühl- und/oder Schmiermittels (26),
- ggf. Beaufschlagen des Kühl- und/oder Schmiermittels (26) mit Druck mittels einer Pumpe,
- Zuführen des Kühl- und/oder Schmiermittels (26) durch eine Zuführeinheit an einen ersten Kupplungsabschnitt (12) und an einen zweiten Kupplungsabschnitt (20),
- Abführen des Kühl- und/oder Schmiermittels (26) zurück an die Umgebung.

## Claims

1. Gearbox (2) with at least one first shaft (6) rotatably arranged in a first bearing (10), which can be connected or is connected to a power device (8), combustion engine or electric motor that can be operated as a motor or generator, and has a first coupling section (12) at one end,
with at least one second shaft (14) rotatably arranged in a second bearing (16), which can be connected or is connected to a rotary machine (18) and
which has a second coupling section (20) at one end, which can be arranged or is arranged with the at least one first coupling section (12) of the at least one first shaft (6) in such a way that torque can be transmitted from the first shaft (6) to the second shaft (14) and/or vice versa,
with a housing (22) which supports at least the first bearing (10) of the first shaft (6) and at least the second bearing (16) of the second shaft (14) and
at least partially surrounds the coupling sections (12, 20), and
with a cooling and/or lubricating device (28) for supplying and removing cooling and/or lubricating agent (26) to and from the coupling sections (12, 20),
the first coupling section (12) of the first shaft (6) and the second coupling section (20) of the second shaft (14) are each formed at least in one section from at least one corrosion-resistant material or comprise such a material;
the cooling and/or lubricating agent (26) comprises water or an aqueous system, **characterised in that**
the corrosion-resistant material comprises at least one corrosion-resistant hard metal material in the form of a sintered carbide hard metal.

2. Gearbox (2) according to claim 1, **characterised in that**
the first coupling section (12) and the second coupling section (20) each comprise at least one gear wheel formed from or comprising at least one corrosion-resistant hard metal material in the form of a sintered carbide hard metal.

3. Gearbox (2) according to claim 1 or 2, **characterised in that**
the first coupling section (12) and/or the second coupling section (20) each comprise at least one worm gear with at least one worm wheel, formed from or comprising at least one corrosion-resistant hard metal material in the form of a sintered carbide hard metal.

4. Gearbox (2) according to one or more of the preceding claims, **characterised in that** the cooling and/or lubricating device (28) has a supply unit (36) comprising at least one pump (34), with which the cooling and/or lubricating agent (26) can be conveyed to or between the contact surfaces of the first coupling section (12) and the second coupling section (20) and to the sliding bearing surfaces of the first bearing (10) and/or the second bearing (16) for hydrostatic and/or hydrodynamic lubrication.

5. Gearbox (2) according to one or more of the preceding claims, **characterised in that** the cooling and/or lubrication device (28) is formed by at least one first opening in the housing (22), through which ambient water (24) can flow in, and by at least one second opening in the housing (22), through which the ambient water (24) can flow out again.

6. Gearbox (2) according to one or more of the preceding claims, **characterised in that** the first bearing (10) and/or the second bearing (16) is formed from ceramic and/or from a fibre-reinforced ceramic material and/or a corrosion-resistant hard metal material in the form of a sintered carbide hard metal, or that at least the respective bearing surface has a coating which is formed from ceramic and/or at least one fibre-reinforced ceramic material and/or at least one corrosion-resistant hard metal material in the form of a sintered carbide hard metal.

7. Gearbox (2) according to one or more of the preceding claims, **characterised in that** the first bearing (10) and/or the second bearing (16) comprises a roller bearing or a sliding bearing formed from plastic, rubber, bronze and/or stainless steel, in particular austenitic steel.

8. Gearbox (2) according to one or more of the preceding claims, **characterised in that** the housing (22) is made of plastic, fibre-reinforced plastic and/or plastic with steel inserts.

9. Gearbox (2) according to one of claims 1 to 8, **characterised in that** a corrosion element is arranged in the cooling and/or lubricating device (28), which comprises a metallic material whose tendency to corrode is at least higher than the tendency to corrode of at least one section of the first shaft (6) and/or the second shaft and/or the energy device (8) and/or the first coupling section (12) of the first shaft (6) and/or the second coupling section (20) of the second shaft (14) and/or the first bearing (10) and/or the second bearing (16).

10. Gearbox (2) according to claim 9, **characterised in that**
the corrosion element comprises a ferritic material.

11. Gearbox (2) according to one of claims 1 to 10, with at least one first shaft (6) rotatably arranged in a first bearing (10), which is connected on one side to a power device (8), internal combustion engine or electric machine that can be operated as a motor or generator, and on the other hand is connectable to or connected to a rotary machine (18), with a housing (22) that supports and at least partially surrounds at least the first bearing (10) of the first shaft (6), and with a cooling and/or lubrication device (28) for supplying and removing cooling and/or lubricating agent (26) to and from the first bearing (10) and/or the first shaft (6),
**characterised in that**
the first shaft (6) or the first bearing (10) are each formed from at least one corrosion-resistant material or comprise such a material in at least one section, or each have at least one coating that protects against corrosion in at least one section.

12. Gearbox (2) according to one or more of the preceding claims, **characterised in that** it constitutes a gearbox for a watercraft.

13. Method for operating a gearbox (2) according to one of claims 1 to 12, comprising the steps:
- Suction of a cooling and/or lubricating agent (26) formed by water or an aqueous solution from the environment,
- if necessary, filtering and/or cleaning the coolant and/or lubricant (26),
- if necessary, applying pressure to the coolant and/or lubricant (26) by means of a pump,
- supplying the coolant and/or lubricant (26) through a supply unit to a first coupling section (12) and to a second coupling section (20),
- Discharging the coolant and/or lubricant (26) back into the environment.

## Revendications

1. Transmission (2) comprenant au moins un premier arbre (6) monté rotatif dans un premier palier (10), qui peut être relié ou est relié à un dispositif d'énergie (8), un moteur à combustion ou un moteur électrique pouvant fonctionner en mode moteur ou générateur, et qui comporte à une extrémité une première section d'accouplement (12),
avec au moins un deuxième arbre (14) monté rotatif dans un deuxième palier (16), qui peut être relié ou est relié à une machine tournante (18) et
qui présente à une extrémité une deuxième section d'accouplement (20) qui peut être disposée ou est disposée avec la au moins une première section d'accouplement (12) du au moins un premier arbre (6) de telle sorte qu'un couple puisse être transmis du premier arbre (6) au deuxième arbre (14) et/ou inversement,
avec un boîtier (22) qui supporte au moins le premier palier (10) du premier arbre (6) et au moins le deuxième palier (16) du deuxième arbre (14) et
entoure au moins partiellement les sections d'accouplement (12, 20), et
avec un dispositif de refroidissement et/ou de lubrification (28) pour amener et évacuer le fluide de refroidissement et/ou de lubrification (26) vers les sections d'accouplement (12, 20),
la première section d'accouplement (12) du premier arbre (6) et la deuxième section d'accouplement (20) du deuxième arbre (14) sont chacune formées au moins dans une section à partir d'au moins un matériau résistant à la corrosion ou comprennent un tel matériau;
que le liquide de refroidissement et/ou lubrifiant (26) comprend de l'eau ou un système aqueux
**caractérisé en ce que**
le matériau résistant à la corrosion comprend au moins un matériau en métal dur résistant à la corrosion sous la forme d'un carbure métallique fritté.

2. Transmission (2) selon la revendication 1, **caractérisé en ce que**
la première section d'accouplement (12) et la deuxième section d'accouplement (20) comprennent chacune au moins une roue dentée formée à partir d'au moins un matériau en métal dur résistant à la corrosion sous forme d'un métal dur fritté à base de carbure ou comprenant un tel matériau.

3. Transmission (2) selon la revendication 1 ou 2, **caractérisé en ce que**
la première section d'accouplement (12) et/ou la deuxième section d'accouplement (20) comprennent chacune au moins une vis sans fin avec au moins une roue à vis sans fin, formée ou comprenant au moins un matériau métallique dur résistant à la corrosion sous la forme d'un carbure métallique fritté.

4. Transmission (2) selon une ou plusieurs des revendications précédentes,
**caractérisé en ce que**
le dispositif de refroidissement et/ou de lubrification (28) comporte une unité d'alimentation (36) comprenant au moins une pompe (34), avec laquelle le fluide de refroidissement et/ou de lubrification (26) peut être transporter vers ou entre les surfaces de contact de la première section d'accouplement (12) et de la deuxième section d'accouplement (20) et sur les surfaces de palier lisse du premier palier (10) et/ou du deuxième palier (16) pour une lubrification hydrostatique et/ou hydrodynamique.

5. Transmission (2) selon une ou plusieurs des revendications précédentes,
**caractérisée en ce que**
le dispositif de refroidissement et/ou de lubrification (28) est formé par au moins une première ouverture dans le boîtier (22), à travers laquelle l'eau ambiante (24) peut s'écouler, et par au moins une deuxième ouverture dans le boîtier (22), à travers laquelle l'eau ambiante (24) peut s'écouler à nouveau.

6. Transmission (2) selon une ou plusieurs des revendications précédentes,
**caractérisée en ce que**
le premier palier (10) et/ou le deuxième palier (16) est formé de céramique et/ou d'un matériau céramique renforcé de fibres et/ou d'un matériau en métal dur résistant à la corrosion sous la forme d'un métal dur fritté à base de carbure, ou au moins la surface de palier respective présente un revêtement qui est formé de céramique et/ou d'au moins un matériau céramique renforcé de fibres et/ou d'au moins un matériau en métal dur résistant à la corrosion sous la forme d'un métal dur au carbure fritté.

7. Transmission (2) selon une ou plusieurs des revendications précédentes,
**caractérisée en ce que**
le premier palier (10) et/ou le deuxième palier (16) comprend un palier à roulement ou un palier lisse constitué de plastique, de caoutchouc, de bronze et/ou d'acier inoxydable, en particulier d'acier austénitique.

8. Engrenage (2) selon une ou plusieurs des revendications précédentes, **caractérisé en ce que**
le boîtier (22) est formé d'une matière plastique, d'une matière plastique renforcée de fibres et/ou d'une matière plastique avec insert en acier.

9. Engrenage (2) selon l'une des revendications 1 à 8, **caractérisé en ce qu'**
un élément de corrosion est disposé dans le dispositif de refroidissement et/ou de lubrification (28), lequel élément comprend un matériau métallique dont la tendance à la corrosion est au moins supérieure à la tendance à la corrosion d'au moins une partie du premier arbre (6) et/ou du deuxième arbre et/ou du dispositif d'énergie (8) et/ou de la première section d'accouplement (12) du premier arbre (6) et/ou de la deuxième section d'accouplement (20) du deuxième arbre (14) et/ou du premier palier (10) et/ou du deuxième palier (16).

10. Transmission (2) selon la revendication 9, **caractérisée en ce que**
l'élément de corrosion comprend un matériau ferritique.

11. Transmission (2) selon l'une des revendications 1 à 10, avec au moins un premier arbre (6) monté rotatif dans un premier palier (10), qui est relié d'une part à un dispositif d'énergie (8), moteur à combustion interne ou machine électrique pouvant fonctionner en mode moteur ou générateur, et d'autre part relié ou pouvant être relié à une machine tournante (18), comprenant un carter (22) qui supporte et entoure au moins partiellement au moins le premier palier (10) du premier arbre (6), et avec un dispositif de refroidissement et/ou de lubrification (28) pour amener et évacuer un agent de refroidissement et/ou de lubrification (26) vers le premier palier (10) et/ou vers le premier arbre (6),
**caractérisé en ce que**
le premier arbre (6) ou le premier palier (10) sont chacun formés au moins dans une partie d'au moins un matériau résistant à la corrosion ou comprennent un tel matériau, ou présentent chacun au moins dans une partie au moins un revêtement protégeant contre la corrosion.

12. Transmission (2) selon une ou plusieurs des revendications précédentes,
**caractérisée en ce que**
elle constitue une transmission pour un bateau.

13. Procédé pour faire fonctionner une transmission (2) selon l'une des revendications 1 à 12, comprenant les étapes suivantes:
- aspiration d'un agent de refroidissement et/ou de lubrification (26) constitué d'eau ou d'une solution aqueuse à partir de l'environnement,
- le cas échéant, filtration et/ou purification du liquide de refroidissement et/ou lubrifiant (26),
- le cas échéant, mise sous pression du liquide de refroidissement et/ou lubrifiant (26) à l'aide d'une pompe,
- alimentation du liquide de refroidissement et/ou du lubrifiant (26) par une unité d'alimentation vers une première section d'accouplement (12) et vers une deuxième section d'accouplement (20),
- évacuer le liquide de refroidissement et/ou le lubrifiant (26) vers l'environnement.
